Europäisches Patentamt

European Patent Office

Office européen des brevets

(19)

(11) **EP 1 608 207 A2**

(12) **EUROPÄISCHE PATENTANMELDUNG**

(43) Veröffentlichungstag:
**21.12.2005 Patentblatt 2005/51**

(51) Int Cl.⁷: **H05B 41/282**

(21) Anmeldenummer: **05010915.6**

(22) Anmeldetag: **19.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **15.06.2004 DE 102004028799**

(71) Anmelder: **Patent-Treuhand-Gesellschaft für elektrische Glühlampen mbH**
**81543 München (DE)**

(72) Erfinder:
• **Franck, Felix, Dr.**
**80333 München (DE)**
• **Haeusser-Boehm, Helmut, Dr.**
**81547 München (DE)**

(54) **Schaltung zum Betrieb von Lichtquellen**

(57) Ein elektronischer Transformator für Halogen-Glühlampen ist mit einem selbstschwingenden Halbbrücken-Wechselrichter ausgestattet. Der Halbbrücken-Wechselrichter enthält eine Startschaltung mit einem Start-Kondensator (C3), die eine Schwingung des Halbbrücken-Wechselrichters nach jeder Netzhalbwelle startet, indem ein unterer Halbbrücken-Transistor (T2) angesteuert wird. Während der Schwingung des Halbbrücken-Wechselrichters muss die Startschaltung unterdrückt werden. Dies geschieht erfindungsgemäß durch Entladen des Startkondensators (C3) immer dann, wenn ein oberer Halbbrücken-Transistor einschaltet (T1). Dies wird durch ein Verstärkerelement (V1) erreicht, das über einen Hochpass (C4) vom Halbbrücken-Mittelpunkt (M) angesteuert wird.

**FIG 1**

EP 1 608 207 A2

**Beschreibung**

**Technisches Gebiet**

Die Erfindung betrifft Schaltung zum Betrieb von Lichtquellen. Insbesondere betrifft die Erfindung Halbbrükken-Wechselrichter zum Betrieb von Halogenglühlampen.

**Stand der Technik**

Zum Betrieb von Lichtquellen sind Halbbrücken-Wechselrichter allgemein bekannt. Der Halbbrücken-Wechselrichter wird von einer Versorgungsspannung gespeist, die eine Gleichspannung ist. Für Lichtquellen deren Lichtstrom nur träge der bereitgestellten elektrischen Energie folgt, kann die Gleichspannung gepulst sein, ohne die Qualität des Lichts zu beeinträchtigen. Halogenglühlampen stellen eine solche Lichtquelle dar. Halbbrücken-Wechselrichter für Halogenglühlampen werden deshalb im allgemeinen von einer gleichgerichteten Netzspannung als Versorgungsspannung gespeist, wobei keine Glättung vorgesehen ist.

Weiterhin ist allgemein bekannt, dass Halbbrücken-Wechselrichter für Halogenglühlampen aus Kostengründen als selbstschwingende Wechselrichter ausgeführt werden. Selbstschwingend bedeutet in diesem Zusammenhang, dass einem Ausgangskreis ein Ansteuersignal für elektronischen Schalter der Halbbrücke entnommen wird. Im folgenden wird unter einem Halbbrücken-Wechselrichter immer ein selbstschwingender Halbbrücken-Wechselrichter verstanden. Er besteht im wesentlichen aus der Serienschaltung eines oberen und eines unteren elektronischen Schalter, die in einem Halbbrücken-Mittelpunkt verbunden sind und zwischen die Versorgungsspannung und eine Massepotenzial geschaltet sind.

Die Schwingung des Halbbrücken-Wechselrichters muss durch eine Startschaltung gestartet werden. Dies ist nach jeder Netzhalbwelle nötig, da die Schwingung bei niedriger momentaner Netzspannung abreißt. Die Startschaltung besteht im wesentlichen aus einem Start-Kondensator und einem Triggerelement. Sobald die Spannung am Start-Kondensator eine Triggerschwelle überschreitet, wird eine Startimpuls ausgelöst; dies bedeutet, dass das Triggerelement den Start-Kondensator auf die Steuerelektrode des unteren elektronischen Schalters schaltet. Damit wird der untere elektronische Schalter eingeschaltet und die Schwingung des Halbbrücken-Wechselrichters setzt ein. Der Start-Kondensator muss dafür soviel Energie liefern, damit der untere elektronische Schalter sicher und lange genug eingeschaltet bleibt.

Schwingt der Halbbrücken-Wechselrichter, so muss Sorge dafür getragen werden, dass weitere Startimpulse durch die Startschaltung unterbleiben, da dadurch die laufende Schwingung gestört wird. Ein Startimpuls während der obere elektronische Schalter eingeschaltet ist führt sogar zur Zerstörung der Halbbrücke, da ein sog. Querstrom ausgelöst wird.

Ein Lösung zu diesem Problem wird in EP 0 682 464 (Lecheler) vorgeschlagen. Dabei wird ein Schalttransistor mit seinen Arbeitselektroden parallel zum Start-Kondensator geschaltet und vom Steuersignal des unteren elektronischen Schalters angesteuert. Der Start-Kondensator wird im Stand der Technik also immer dann entladen, wenn der untere elektronische Schalter angesteuert wird. Solange der Halbbrücken-Wechselrichter schwingt, wird damit verhindert, dass die Spannung am Start-Kondensator einen Wert annimmt, der über das Triggerelement einen Startimpuls abgibt.

Ein Problem besteht bei der im Stand der Technik beschriebenen Schaltung beim Start der Schwingung des Halbbrücken-Wechselrichters. Gerade dann, wenn der Start-Kondensator genügend Energie zur Ansteuerung des unteren elektronischen Schalters abgeben soll, wird der beschriebene Schalttransistor angesteuert und entnimmt dem Start-Kondensator Energie. Ein zuverlässiger Start der Schwingung des Halbbrücken-Wechselrichters ist damit nicht gewährleistet.

**Darstellung der Erfindung**

Es ist Aufgabe der vorliegenden Erfindung, einen Halbbrücken-Wechselrichters zum Betrieb von Lichtquellen bereit zu stellen, dessen Schwingung zuverlässig gestartet wird.

Diese Aufgabe wird durch eine Schaltung zum Betrieb von Lichtquellen gelöst, die ein Verstärkerelement mit einem Eingang und einem Ausgang enthält. Ohne die Allgemeinheit zu beschränken, wird angenommen, dass die Potenziale am Eingang und am Ausgang auf das Massepotenzial bezogen sind. Der Ausgang des Verstärkerelements ist mit dem Start-Kondensator verbunden, der ebenfalls massebezogen ist. Liegt am Eingang des Verstärkerelements ein positives Signal an, so wird der Start-Kondensator entladen.

Erfindungsgemäß wird das Signal am Eingang des Verstärkerelements aus dem Halbbrücken-Mittelpunkt über einen Hochpass erzeugt. Der Hochpass erzeugt bei einer steigenden Flanke am Halbbrücken-Mittelpunkt ein positives Signal am Eingang des Verstärkerelements. Der Startkondensator wird dadurch erfindungsgemäß dann entladen, wenn der obere und nicht der untere elektronische Schalter einschaltet. Der Start der Schwingung des Halbbrücken-Wechselrichters wird wie oben erläutert, durch einen Startimpuls am unteren elektronischen Schalter ausgelöst. Beim diesem Startvorgang wird bei der vorliegenden Erfindung der Start-Kondensator nicht entladen, wodurch ein zuverlässiger Start des Halbbrücken-Wechselrichters ermöglicht wird.

## Kurze Beschreibung der Zeichnungen

Im folgenden soll die Erfindung anhand von Ausführungsbeispielen unter Bezugnahme auf Zeichnungen näher erläutert werden. Es zeigen:

Figur 1    ein Ausführungsbeispiel für eine erfindungsgemäße Schaltung zum Betrieb von Lichtquellen,

Figur 2    ein weiteres Ausführungsbeispiel für eine erfindungsgemäße Schaltung zum Betrieb von Lichtquellen,

Figur 3    ein weiteres Ausführungsbeispiel für eine erfindungsgemäße Schaltung zum Betrieb von Lichtquellen,

Figur 4    ein Ausführungsbeispiel für ein Verstärkerelement, wie es in der Erfindung Verwendung findet,

Figur 5    ein weiteres Ausführungsbeispiel für ein Verstärkerelement, wie es in der Erfindung Verwendung findet,

Figur 6    ein weiteres Ausführungsbeispiel für ein Verstärkerelement, wie es in der Erfindung Verwendung findet,

Figur 7    ein weiteres Ausführungsbeispiel für ein Verstärkerelement, wie es in der Erfindung Verwendung findet,

Im folgenden werden Widerstände durch den Buchstaben R, Transistoren durch den Buchstaben T, Verstärkerelemente durch den Buchstaben V, Dioden durch den Buchstaben D, Kondensatoren durch den Buchstaben C jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

## Bevorzugte Ausführung der Erfindung

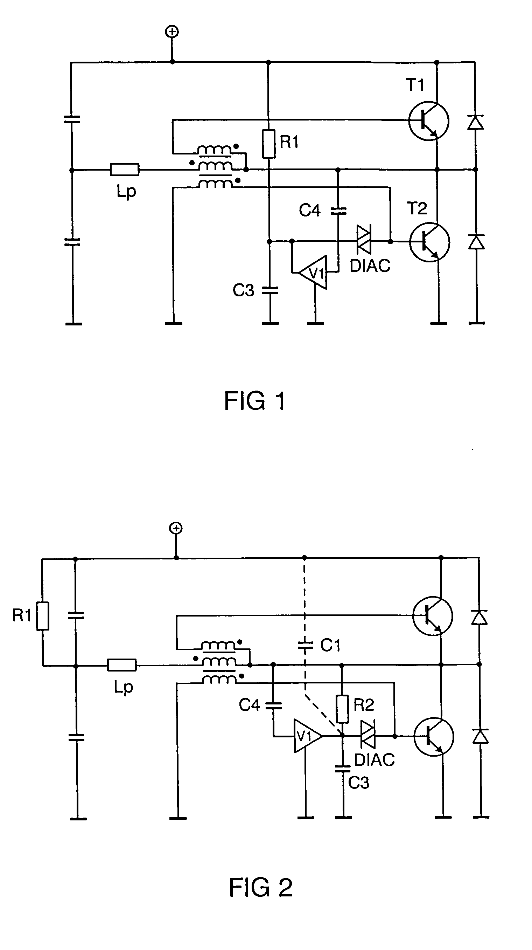

In Figur 1 ist ein Ausführungsbeispiel für eine erfindungsgemäße Schaltung zum Betrieb von Lichtquellen dargestellt. Zwischen einem Anschluss für eine Versorgungsspannung, der mit einem + Zeichen gekennzeichnet ist, und einem Massepotenzial ist die Serienschaltung eines oberen elektronischen Schalters T1 und eines unteren elektronischen Schalters T2 geschaltet. Der Verbindungsknoten M bildet einen Halbbrücken-Mittelpunkt. Die elektronischen Schalter sind als NPN-Bipolartransistoren dargestellt. Es können jedoch auch andere elektronische Schalter wie z. B. MOSFET oder IGBT verwendet werden. Parallel zu jedem elektronischen Schalter ist jeweils eine optionale Freilaufdiode eingezeichnet.
Parallel zur Serienschaltung von T1 und T2 ist die Serienschaltung von zwei Koppel-Kondensatoren C11 und C12 geschaltet. Zwischen dem Verbindungspunkt von C11 und C12 und dem Halbbrücken-Mittelpunkt M liefert der Halbbrücken-Wechselrichter, der im wesentlichen aus T1, T2, C11 und C12 besteht eine gegenüber einer Netzspannung hochfrequente Wechselspannung. An diese Wechselspannung ist die Serienschaltung der Primärwicklung eines Rückkoppel-Transformators Tr und einer Last geschaltet. Ein Koppel-Kondensator C11 oder C12 kann entfallen.
Die Last ist durch einen Widerstand mit der Bezeichnung Lp dargestellt. Die Last kann im einfachsten Fall nur aus einer Glühlampe bestehen. Es können aber auch Niedervolt-Halogen-Glühlampen über einen Transformator angeschlossen werden.
Der Rückkoppel-Transformators Tr erfasst mit der Primärwicklung einen Laststrom und koppelt ihn über zwei Sekundärwicklungen jeweils an Steuerelektroden von T1 und T2. Dadurch wird ein Rückkoppel-Kreis geschlossen, wodurch ein selbstschwingender Halbbrücken-Wechselrichter entsteht.
Eine Startschaltung wird durch einen Start-Kondensator C3, einen Widerstand R11 und ein Triggerelement DIAC gebildet. C3 und R11 sind in Serie zwischen die Versorgungsspannung und das Massepotenzial geschaltet. Der DIAC verbindet den Verbindungspunkt von C3 und R11 mit der Steuerelektrode des unteren elektronischen Schalters T2. Über R11 wird C3 von der Versorgungsspannung aufgeladen. Erreicht die Spannung einen Wert, der über der Schwellspannung des DIAC von typisch 33V liegt, so gibt C3 einen Startimpuls auf die Steuerelektrode von T2.
Erfindungsgemäß enthält die Schaltung ein Verstärkerelement V1, das in Figur 1 massebezogen ist. Ein Ausgang von V1 ist mit C3 verbunden. Ein Eingang von V1 ist erfindungsgemäß über einen Hochpass mit dem Halbbrücken-Mittelpunkt M verbunden. Der Hochpass ist im Ausführungsbeispiel nach Figur 1 durch einen Hochpass-Kondensator C4 realisiert.

Steigt die Spannung am Halbbrücken-Mittelpunkt M an, so erzeugt C4 am Eingang von V1 eine positive Spannung. Daraufhin entlädt V1 über seinen Ausgang den Start-Kondensator C3, womit weitere Startimpulse unterbunden werden. Schaltet der untere elektronische Schalter T2 ein, entsteht ein negatives Signal am Eingang von V1. Ein Entladen von C3 wird damit aktiv gestoppt. Bis zum nächsten Einschalten des oberen elektronischen Schalters T1 wird C3 nur geringfügig geladen. Die Schwellspannung des Triggerelements DIAC wird in dieser Zeit nicht erreicht.

Der Widerstand R1 hat einen typischen Wert von 330kOhm und der Hochpass-Kondensator C4 einen typischen Wert von 10nF.

In Figur 2 ist eine modifizierte Variante des Ausführungsbeispiels aus Figur 1 dargestellt. Gegenüber Figur 1 ist in Figur 2 der Widerstand R11 aufgeteilt in einen ersten Widerstand R1 und einen zweiten Widerstand R2. R2 verbindet den Start-Kondensator C3 mit dem Halbbrücken-Mittelpunkt M, während R1 den Halbbrücken-Mittelpunkt M mit der Versorgungsspannung verbindet. Dies geschieht im Beispiel über die Last und die Primärwicklung des Rückkoppel-Transformators Tr. R1 und R2 hat typisch jeweils einen Wert von 220kOhm. Gegenüber der Variante in Figur 1 kann damit die Verlustleistung der Widerstände reduziert werden. Zudem wird bei abgeschalteter Halbbrücke der Start-Kondenstor C3 langsamer geladen. Dies bewirkt eine geringere Anzahl von Startimpulsen pro Zeiteinheit, was die Bauteilebelastung und die Ruhestromaufnahme der Schaltung reduziert.

Ein Beschleunigungs-Kondensator C1 verbindet in Figur 2 den Start-Kondensator C3 mit der Versorgungsspannung. Damit wird eine schnelleres Auslösen eines Startimpulses nach einem Netzspannungs-Nulldurchgang erreicht. Weist die Versorgungsspannung einen genügend hohen Wechselstromanteil auf, so genügt der Beschleunigungs-Kondensator C1 alleine, um den Start-Kondensator C3 auf den Schwellenwert des Triggerelements DIAC aufzuladen. die Widerstände R1 und R2 oder R11 können dann entfallen. Ein hoher Wechselstromanteil der Versorgungsspannung liegt dann vor, wenn eine sinusförmige Netzspannung durch einen Vollbrückengleichrichter gleichgerichtet und nicht geglättet wird. Ein hoher Wechselstromanteil der Versorgungsspannung liegt auch dann vor, wenn die Schaltung an einem Phasenanschnitt- oder Phasenabschnitt-Dimmer betrieben wird.

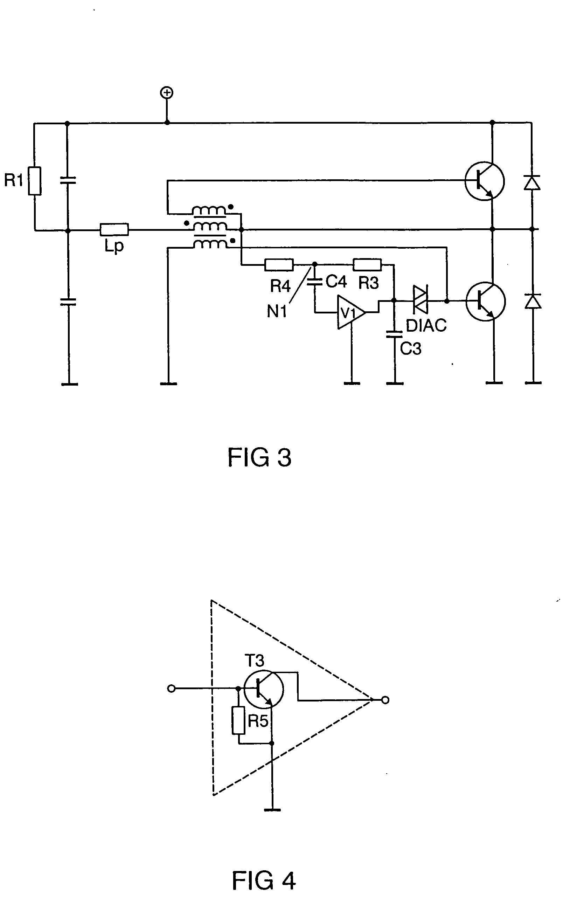

In Figur 3 ist ein weiteres Ausführungsbeispiel einer erfindungsgemäßen Schaltung dargestellt. Gegenüber dem Ausführungsbeispiel in Figur 2 ist der zweite Widerstand R2 in die Serienschaltung eines dritten und eines vierten Widerstands R3, R4 aufgespalten. Zwischen R3 und R4 liegt ein erster Verbindungspunkt N1. Der Hochpass-Kondensator C4 ist nicht direkt mit dem Halbrücken-Mittelpunkt M verbunden sondern ist am Verbindungspunkt N1 angeschlossen und somit über R4 mit dem Halbrücken-Mittelpunkt M verbunden. Durch das Verhältnis von R3 zu R4 kann die Charakteristik des Hochpasses bestehend aus R4 und C4 eingestellt werden, unabhängig von der Summe der Widerstände R3 und R4. Typische Werte sind:

C1: 3.3nF; C3: 10nF; C4 22nF; R3: 75kOhm; R4: 75kOhm.

In Figur 4 ist ein Ausführungsbeispiel für ein Verstärkerelement V1 dargestellt, wie es in der Erfindung Verwendung findet. Das Beispiel in Figur 4 stellt das einfachste Beispiel für V1 dar. Ein NPN-Bipolartransistor T3 liegt mit dem Emitteranschluss am Massepotenzial. Die Basis bildet den Eingang des Verstärkerelements, der Kollektor bildet den Ausgang des Verstärkerelements. Zwischen Basis und Emitter ist ein Widerstand R5 geschaltet, der typisch einen Wert von 470 Ohm aufweist. Liegt ein positives Signal am Eingang an, so wird der Transistor T3 angesteuert an entlädt über seinen Kollektor den Start-Kondensator C3.

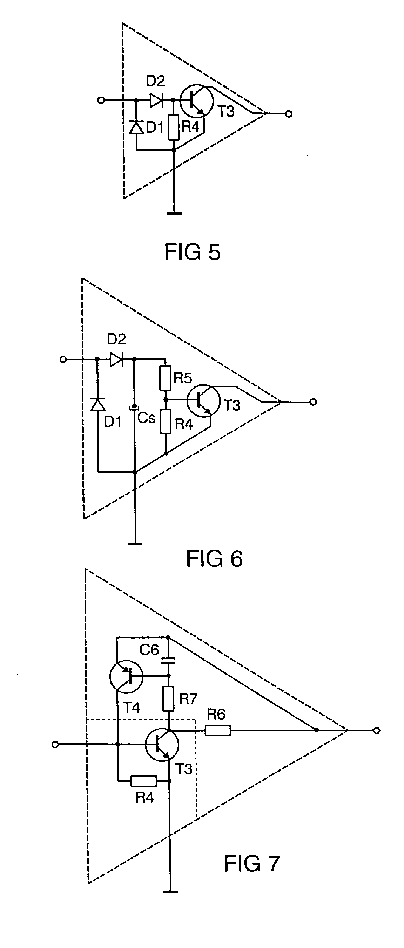

In Figur 5 ist ein weiteres Ausführungsbeispiel für ein Verstärkerelement V1 dargestellt, wie es in der Erfindung Verwendung findet. Das Beispiel in Figur 4 wurde in Figur 5 um die Dioden D1 und D2 erweitert. Der Eingang des Verstärkerelements ist über D2 mit der Basis von T3 und über D1 mit dem Massepotenzial verbunden. Damit werden die Schalteigenschaften von T3 verbessert.

In Figur 6 ist ein weiteres Ausführungsbeispiel für ein Verstärkerelement V1 dargestellt, wie es in der Erfindung Verwendung findet. Das Beispiel in Figur 5 wurde in Figur 6 um den Widerstand R5 und den Kondensator C5 erweitert. R5 und C5 bilden eine Verzögerungseinrichtung. R5 ist in Serie zu D2 geschaltet und C5 verbindet D2 mit dem Massepotenzial. Durch diese Verzögerungseinrichtung wird erreicht, dass der Startkondensator C3 nicht sofort entladen wird, wenn ein Signal am Eingang des Verstärkerelements anliegt, sondern erst dann, wenn C5 geladen wurde. Dies kann zur Unterdrückung von Störsignalen wichtig sein. Außerdem kann die Verzögerungseinrichtung verwendet werden, um das Verstärkerelement in Verbindung mit einer Abschaltung im Fehlerfall zu verwenden.

In Figur 7 ist ein weiteres Ausführungsbeispiel für ein Verstärkerelement V1 dargestellt, wie es in der Erfindung Verwendung findet. Das Beispiel in Figur 4 wurde in Figur 7 um eine Einrasteinrichtung erweitert. Der Kollektor von T3 ist nun über einen widerstand R6 mit dem Ausgang des Verstärkerelements verbunden. Das Einrastelement bildet der Widerstand R7, der Kondensator C6 und der PNP-Transistor T4. Die Serienschaltung aus R7 und C6 ist parallel zum R6 geschaltet. Der Kollektor von T4 ist mit der Basis von T3 verbunden und der Kollektor von T3 ist über R7 mit der Basis von T4 verbunden. Der Emitter von T4 ist mit dem Ausgang des Verstärkerelements verbunden. Die Verschaltung von T3 und T4 in der beschriebenen Weise ist als Thyristor-Nachbildung bekannt. Sobald T4 leitet, rastet der Thyristor ein und schaltet erst wieder ab, wenn ein Haltestrom, der von C3 geliefert wird, unter eine Haltestromschwelle absinkt. Das Einrasten des Thyristors wird durch C6 verzögert. Ersetzt man C6 durch einen Widerstand rastet der Thyristor ohne Verzögerung ein.

Die Einrasteigenschaft des Verstärkerelements bewirkt, dass der Halbbrücken-Wechselrichter abgeschaltet wird, sobald am Eingang des Verstärkerelements lange genug ein positives Signal anliegt. Dies kann zur Abschaltung im Fehlerfall, z.B. Kurzschluss an der Last, genutzt werden. Zur erneuten Inbetriebnahme muss die Schaltung kurzfristig von der Versorgungsspannung abgetrennt werden.

Die Verzögerungseinrichtung aus Figur 6 kann auch mit einer Einrasteinrichtung aus Figur 7 kombiniert werden.

**Patentansprüche**

1. Schaltung zum Betrieb von Lichtquellen mit folgenden Merkmalen:

   - ein Halbbrücken-Wechselrichter mit einer Serienschaltung aus einem oberen und einem unteren elektronischen Schalter (T1, T2), die in einem Halbbrücken-Mittelpunkt (M) verbunden sind und zwischen eine Versorgungsspannung (+) und ein Massepotenzial geschaltet sind,

   - ein Start-Kondensator (C3), der über ein Triggerelement (DIAC) mit einer Steuerelektrode des unteren elektronischen Schalters (T2) verbunden ist,

   - eine Verstärkerelement (V1) mit einem Eingang und einem Ausgang, wobei der Ausgang mit dem Start-Kondensator (C3) derart verbunden ist, dass es den Start-Kondensator (C3) entlädt, falls am Eingang des Verstärkerelements (V1) ein Signal anliegt,

   **dadurch gekennzeichnet, dass** der Eingang des Verstärkerelements (V1) über einen Hochpass (C4, R4)) mit dem Halbbrücken-Mittelpunkt (M) verbunden ist.

2. Schaltung zum Betrieb von Lichtquellen gemäß Anspruch 1, **dadurch gekennzeichnet, dass** der Hochpass ein Hochpass-Kondensator (C4) ist.

3. Schaltung zum Betrieb von Lichtquellen gemäß Anspruch 1 **dadurch gekennzeichnet, dass** der Halbbrücken-Mittelpunkt (M) über einen ersten Widerstand (R1) mit der Versorgungsspannung (+) verbunden ist und der Startkondensator (C3) über einen zweiten Widerstand (R2) mit dem Halbbrücken-Mittelpunkt (M) verbunden ist.

4. Schaltung zum Betrieb von Lichtquellen gemäß einem der vorigen Ansprüche, **dadurch gekennzeichnet, dass** sich der zweite Widerstand (R2) aus der Serienschaltung eines dritten und eines vierten Widerstandes (R3, R4) zusammensetzt, wobei ein erster Verbindungspunkt (N1) entsteht und ein Hochpass-Kondensator (C4) zwischen den ersten Verbindungspunkt (N1) und den Eingang des Verstärkerelements (V1) geschaltet ist.

5. Schaltung zum Betrieb von Lichtquellen gemäß einem der vorigen Ansprüche, **dadurch gekennzeichnet, dass** der Start-Kondensator (C3) ein über einen Beschleunigungs-Kondensator (C1) mit der Versorgungsspannung (+) verbunden ist.

6. Schaltung zum Betrieb von Lichtquellen gemäß einem der vorigen Ansprüche, **dadurch gekennzeichnet, dass** das Verstärkerelement (V1) einen ersten Transistor (T3) mit zwei Arbeitselektroden und einer Steuerelektrode enthält, wobei eine Arbeitselektrode mit dem Ausgang des Verstärkerelements (V1) und eine mit dem Massepotenzial verbunden ist und weiterhin die Steuerelektrode mit dem Eingang des Verstärkerelements (V1) verbunden ist und weiterhin zwischen die Steuerelektrode und dem Massepotenzial ein fünfter Widerstand (R5) geschaltet ist.

7. Schaltung zum Betrieb von Lichtquellen gemäß Anspruch 6, **dadurch gekennzeichnet, dass** zwischen den Eingang des Verstärkerelements (V1) und dem Massepotenzial eine erste Diode (D1) geschaltet ist.

8. Schaltung zum Betrieb von Lichtquellen gemäß Anspruch 6 oder 7, **dadurch gekennzeichnet, dass** zwischen den Eingang des Verstärkerelements (V1) und die Steuerelektrode eine zweite Diode (D2) geschaltet ist.

9. Schaltung zum Betrieb von Lichtquellen gemäß einem der Ansprüche 6 bis 8, **dadurch gekennzeichnet, dass** zwischen den Eingang des Verstärkerelements (V1) und die Steuerelektrode eine Verzögerungseinrichtung (R5, C5) geschaltet ist, die eine Ansteuerung des ersten Transistors (T3) um eine vorgegebene Zeit verzögert.

10. Schaltung zum Betrieb von Lichtquellen gemäß einem der Ansprüche 6 bis 9, **dadurch gekennzeichnet, dass** das Verstärkerelement (V1) eine Einrasteinrichtung (T4, R7, C6) enthält, wodurch der Start-Kondensator (C3) entladen bleibt, auch wenn das Verstärkerelement (V1) an seinem Eingang nicht angesteuert wird.

FIG 1

FIG 2

FIG 3

FIG 4

FIG 5

FIG 6

FIG 7